# EUROPEAN PATENT APPLICATION

(11) **EP 4 773 050 A1**
(43) Date of publication of application: **08.07.2026**
(21) Application number: 24859909.4
(22) Date of filing: 29.08.2024
(51) Int. Cl.: G06Q 10/00, G16Y 10/30, G16Y 20/10, G16Y 40/10

(54) **INFORMATION PROCESSING METHOD, INFORMATION PROCESSING DEVICE, AND COMPUTER PROGRAM**

(30) Priority: 01.09.2023 US 202363536329 P; 27.12.2023 JP 2023221807
(71) Applicant: Panasonic Intellectual Property Management Co., Ltd., Kadoma-shi, Osaka 571-0057 (JP)
(72) Inventor: TANAKA, Koki, Osaka 571-0057 (JP); LIN, Jie, Osaka 571-0057 (JP); HIROTA, Teruto, Osaka 571-0057 (JP)
(74) Representative: Eisenführ Speiser
(86) International application number: PCT/JP2024/030983
(87) International publication number: WO 2025/047882

(57) **Abstract**

A device controller 20 acquires premise information related to control of a target device (e.g., circulator 16). The device controller 20 acquires choice information including a plurality of choices corresponding to a plurality of control modes of the target device. The device controller 20 creates an input sentence that is based on the premise information and the choice information. The device controller 20 inputs the input sentence to generative AI of a chatbot server 18 and acquires output information indicating a specific choice selected from among the plurality of choices.

## Description

### TECHNICAL FIELD

The present disclosure relates to data processing technology and more particularly to an information processing method, an information processing device, and a computer program.

### BACKGROUND ART

A system has been suggested that acquires environmental information of a target space, infers and selects multiple arbitrary life scenes from multiple life scenes set in advance according to the environmental information, and, if all environmental conditions corresponding to the selected life scenes can be realized at the same time, controls air conditioners based on control details for realizing the environmental conditions (see, for example, Patent Literature 1).

### RELATED-ART LITERATURE

### PATENT LITERATURE

Patent Literature 1: JP 2022-182719A

### SUMMARY OF INVENTION

### TECHNICAL PROBLEM

In recent years, generative AI has begun to be used in a variety of fields. The inventors of the present invention have conceived of utilizing generative AI for efficient device control. A purpose of the present disclosure is to provide a technology for controlling devices using generative AI.

### SOLUTION TO PROBLEM

An information processing method according to one embodiment of the present disclosure includes: acquiring premise information related to control of a device; acquiring choice information including a plurality of choices corresponding to a plurality of control modes of the device; creating an input sentence that is based on the premise information and the choice information; and inputting the input sentence to generative AI and acquiring output information indicating a specific choice selected from among the plurality of choices.

Another embodiment of the present disclosure relates to an information processing device. This device includes: a premise acquiring unit that acquires premise information related to control of a device; a choice acquiring unit that acquires choice information including a plurality of choices corresponding to a plurality of control modes of the device; an input sentence creating unit that creates an input sentence that is based on the premise information and the choice information; and an output information acquiring unit that inputs the input sentence to generative AI and acquires output information indicating a specific choice selected from among the plurality of choices.

Optional combinations of the aforementioned constituting elements, and implementations of the disclosure in the form of systems, computer programs, recording medium encoded with computer programs, etc., may also be practiced as additional modes of the present disclosure.

### ADVANTAGEOUS EFFECTS OF INVENTION

The technology according to the present disclosure allows for the realization of device control using generative Al.

### BRIEF DESCRIPTION OF DRAWINGS

[Fig. 1] Fig. 1 is a diagram showing the configuration of a device control system according to an embodiment.
[Fig. 2] Fig. 2 is a block diagram showing functional blocks of a device controller in Fig. 1.
[Fig. 3] Fig. 3 is a diagram showing an example of a template.
[Fig. 4] Fig. 4 is a diagram showing examples of sensor information.
[Fig. 5] Fig. 5 is a diagram showing examples of device information.
[Fig. 6] Fig. 6 is a diagram showing examples of choice information.
[Fig. 7] Fig. 7 is a flowchart showing the operation of the device controller.
[Fig. 8] Fig. 8 is a flowchart showing the details of a prompt creating process in S11 in Fig. 7.
[Fig. 9] Fig. 9 is a diagram showing an example of a prompt.
[Fig. 10] Fig. 10 is a flowchart showing the details of a process in S22 in Fig. 8.
[Fig. 11] Fig. 11 is a flowchart showing the details of a process in S23 in Fig. 8.
[Fig. 12] Fig. 12 is a diagram showing an example of response information from generative AI acquired in S 12 in Fig. 7.
[Fig. 13] Fig. 13 is a flowchart showing the details of an interpretation process in S13 in Fig. 7.
[Fig. 14] Fig. 14 is a flowchart showing the details of a device control process in S15 in Fig. 7.
[Fig. 15] Fig. 15 is a flowchart showing the details of an indication prompt creating process in S16 in Fig. 7.
[Fig. 16] Fig. 16 is a diagram showing an example of a prompt according to the first exemplary variation.
[Fig. 17] Fig. 17 is a diagram showing an example of a prompt according to the second exemplary variation.
[Fig. 18] Fig. 18 is a diagram showing another example of a prompt according to the second exemplary variation.
[Fig. 19] Fig. 19 is a diagram showing an example of an input screen.

### DESCRIPTION OF EMBODIMENTS

The device or the entity that executes the method according to the present disclosure is provided with a computer. By causing the computer to run a program, the function of the device or the entity that executes the method according to the disclosure is realized. The computer includes a processor that operates in accordance with the program as a main hardware feature. The disclosure is nonlimiting as to the type of the processor so long as the function is realized by running the program.

The processor is comprised of one or a plurality of electronic circuits including a semiconductor integrated circuit (IC) or a large-scale integration (LSI). Although the term IC or LSI is used here, the name changes depending on the degree of integration, and those that are referred to as system LSI, very large-scale integration (VLSI), or ultra large-scale integration (ULSI) may be used. Field programmable gate arrays (FPGAs) programmed after the manufacturing of an LSI, or reconfigurable logic devices capable of reconfiguring junction relationships within the LSI or setting up circuit partitions inside the LSI can be also used for the same purpose. The plurality of electronic circuits may be integrated in one chip or provided in a plurality of chips. The plurality of chips may be aggregated in one device or provided in a plurality of devices.

The program may be recorded in a non-transitory recording medium such as a computer-readable read only memory (ROM), optical disk, and hard disk drive or may be recorded in a temporary storage medium such as a computer-readable random-access memory (RAM). The program may be stored in a recording medium in advance or supplied to a recording medium or a memory medium via a wide area communication network including the Internet.

In an embodiment, a technology for controlling devices using generative AI is suggested. Generative AI, also called generative artificial intelligence, is an artificial intelligence system that generates text, images, etc., in response to prompts. Prompts are natural language texts (in other words, a sentence) that describe tasks to be performed by generative AI. The generative AI used by a device controller according to the embodiment is an artificial intelligence chatbot that mimics human conversation through textual dialogs. Hereafter, when simply referred to as generative AI, it refers to artificial intelligence chatbots.

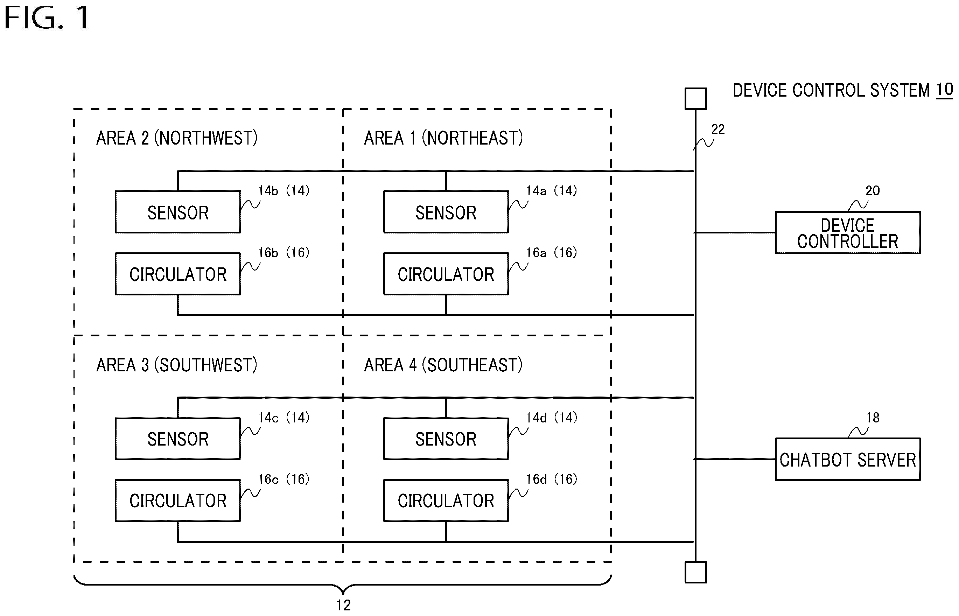

Fig. 1 shows the configuration of a device control system 10 according to an embodiment. The device control system 10 includes a plurality of sensors 14 and a plurality of circulators 16 installed in a target space 12, a chatbot server 18, and a device controller 20. These devices are connected via a communication network 22 including LAN, WAN, Internet, etc.

The plurality of sensors 14 measure predetermined physical quantities in the target space 12. The plurality of sensors 14 may include sensors that measure different types of physical quantities. For example, the plurality of sensors 14 may include a CO2 sensor that measures ambient carbon dioxide (CO2) concentration and a human sensor or camera that counts the number of people. The plurality of sensors 14 include sensors 14a, 14b, 14c, and 14d.

The plurality of circulators 16 generate wind and circulate air in the target space 12. The plurality of circulators 16 includes circulators 16a, 16b, 16c, and 16d.

The target space 12 is a space subject to environmental control, e.g., an office or a room in a house. The target space 12 is divided into a plurality of areas and are divided into Area 1 (northeast), Area 2 (northwest), Area 3 (southwest), and Area 4 (southeast) in the embodiment. In Area 1, the sensor 14a and the circulator 16a are installed. In Area 2, the sensor 14b and the circulator 16b are installed. In Area 3, the sensor 14c and the circulator 16c are installed. In Area 4, the sensor 14d and the circulator 16d are installed. The target space 12 is not limited to an office or a room in a house. For example, the target space 12 may be an indoor space such as a factory, warehouse, or restaurant, or may be a vehicle interior space such as a train or automobile. In other words, the technology according to the present disclosure can be applied to any space that can be divided into areas and contains one or more circulators (devices to be controlled). Further, some of the plurality of areas in the target space 12 do not need to contain circulators (devices to be controlled).

The chatbot server 18 is an information processing device that includes the function of generative AI (artificial intelligence chatbot) and provides chat services using generative AI to external devices.

The device controller 20 is an information processing device that controls a plurality of circulators 16 using chat services using generative AI provided by the chatbot server 18. The device controller 20 may be a dedicated device installed in a user's house (e.g., a remote controller that controls the circulators 16). Further, the device controller 20 may also be a user's smartphone or tablet terminal on which a device control application has been installed. The function of the device controller 20 and the function of the chatbot server 18 may be implemented in a single information processing device.

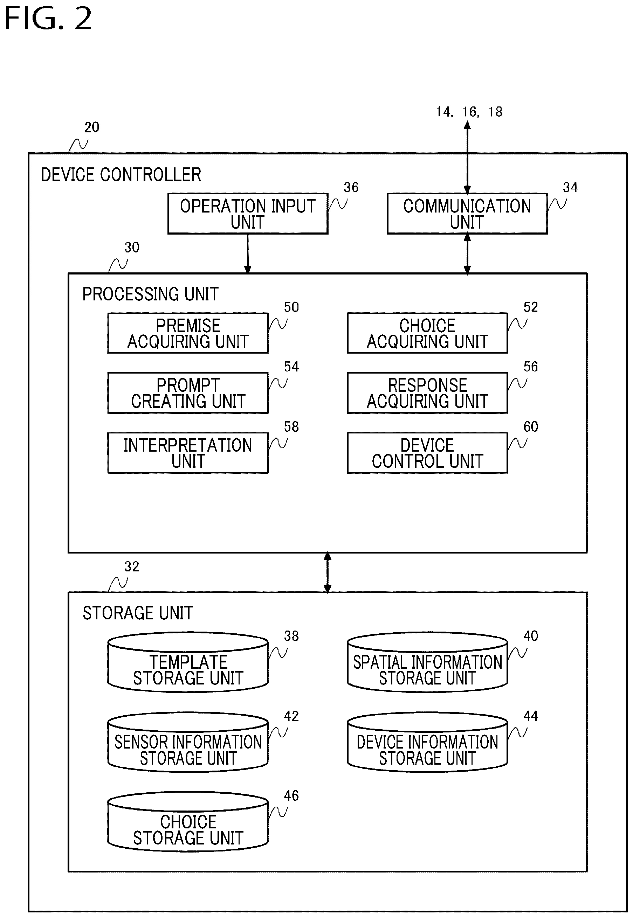

Fig. 2 is a block diagram showing functional blocks of a device controller 20 in Fig. 1. The blocks depicted in the block diagram of the present disclosure are implemented in hardware such as elements or mechanical devices such as a CPU and a memory of a computer, and in software such as a computer program. The figure depicts functional blocks implemented by the cooperation of the hardware and the software. Therefore, it will be obvious to those skilled in the art that the functional blocks may be implemented in a variety of manners by a combination of hardware and software.

The device controller 20 includes a processing unit 30, a storage unit 32, a communication unit 34, and an operation input unit 36. The processing unit 30 executes various types of data processing. The processing unit 30 may be realized by a processor (CPU, etc.) of the device controller 20. The storage unit 32 stores data that is referenced or updated by the processing unit 30. The communication unit 34 communicates with an external device according to a predetermined communication protocol. The processing unit 30 transmits and receives data to and from the sensors 14, the circulators 16, and the chatbot server 18 via the communication unit 34.

The operation input unit 36 receives a user operation and inputs operation information to the processing unit 30. The operation input unit 36 may include buttons, a touch panel, or a keyboard. As an exemplary variation, the operation input unit 36 may be provided on an external device of the device controller 20. For example, a user's smartphone or tablet terminal that communicates with the device controller 20 via the communication network 22 may act as the operation input unit 36. The operation input unit 36 may also be realized by combining devices without direct operation by a person. For example, a device using a timer may act as the operation input unit 36 so as to input instructions to the processing unit 30 according to the seasons of spring, summer, fall, and winter.

The storage unit 32 includes a template storage unit 38, a spatial information storage unit 40, a sensor information storage unit 42, a device information storage unit 44, and a choice storage unit 46. The template storage unit 38 stores a plurality of templates corresponding to a plurality of predetermined problems that can be answered by the generative AI. The plurality of problems may include, for example, a ventilation problem (in other words, a circulator control problem), a lighting control problem, an air cleaner control problem, and a speaker control problem. Each template is a sentence that contains a specific problem to be presented to the generative AI and that serves as a template for creating prompts.

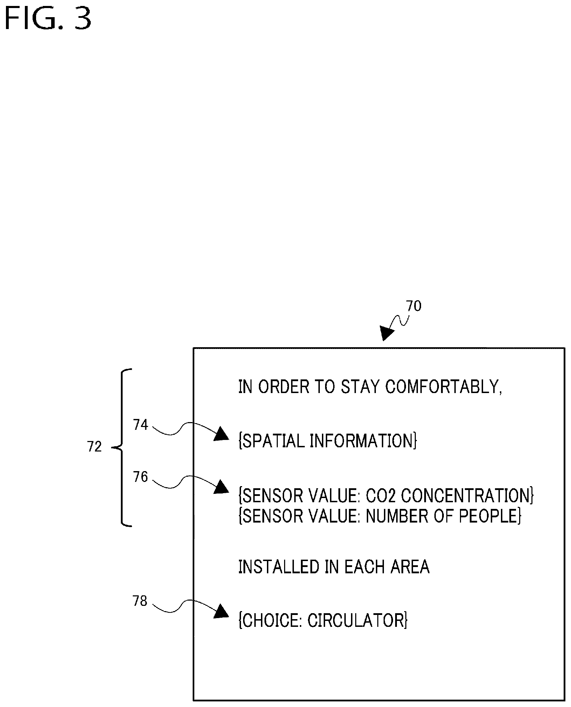

More specifically, the template storage unit 38 stores sets of template IDs, problem types, and templates, which are associated with one another. Fig. 3 shows an example of a template. A template 70 includes premise information 72 and a choice field 78. The premise information 72 is information that serves as a premise for the control of a target device (e.g.**,** a circulator 16) set for each problem. The premise information 72 includes a spatial information field 74 and a sensor value field 76. Although not shown in Fig. 3, the premise information 72 further includes preconditions, as described below.

The spatial information field 74 is a text field where information related to a space in which the target device operates (also referred to as "spatial information") is set. The spatial information according to the embodiment includes information indicating division performed on the target space 12 into a plurality of areas. The spatial information may also include the location and size of each area provided in the target space 12.

The sensor value field 76 is a text field where information detected by a sensor and related to the condition of the space in which the target device operates (hereinafter also referred to as "sensor value information") is set. The sensor value information according to the embodiment includes the CO2 concentration of the target space 12 in which the circulators 16 operate, which is detected by the sensors 14. More specifically, the sensor value information includes the CO2 concentration for each area where each sensor 14 is installed.

The choice field 78 is a text field where information including a plurality of choices corresponding to a plurality of control modes of the target device (hereinafter also referred to as "choice information") is set. Choice information for the circulators 16 may include a plurality of choices regarding the air blowing direction. The choice information according to the embodiment is set based on the plurality of areas provided in the target space 12. For example, the choice information may include a plurality of choices that define from which area to which area the circulators 16 are to blow air. In other words, the choice information may include a plurality of choices that define the air blowing direction of the circulators 16 using the areas.

Referring back to Fig. 2, the spatial information storage unit 40 stores spatial information. More specifically, the spatial information storage unit 40 includes a space ID and spatial information. The spatial information includes information such as the shape, size, area, and the like of the target space 12.

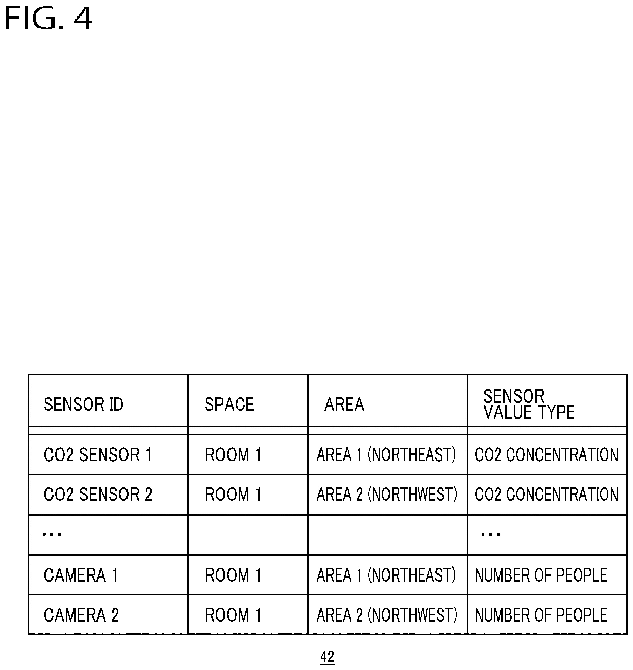

The sensor information storage unit 42 stores information related to one or more sensors (the plurality of sensors 14 in the embodiment) installed in the target space 12 (hereinafter, "sensor information"). Fig. 4 shows an example of the sensor information. The sensor information includes the IDs of the sensors 14, the IDs of spaces in which the sensors 14 are installed, the IDs of areas in which the sensors 14 are installed (in the spaces), and sensor value types. The sensor value types are information that indicates the types of physical quantity measured by the sensors 14. A CO2 sensor 1 in Fig. 4 corresponds to a sensor 14a in Fig. 1, for example. A CO2 sensor 2 in Fig. 4 corresponds to a sensor 14b in Fig. 1, for example.

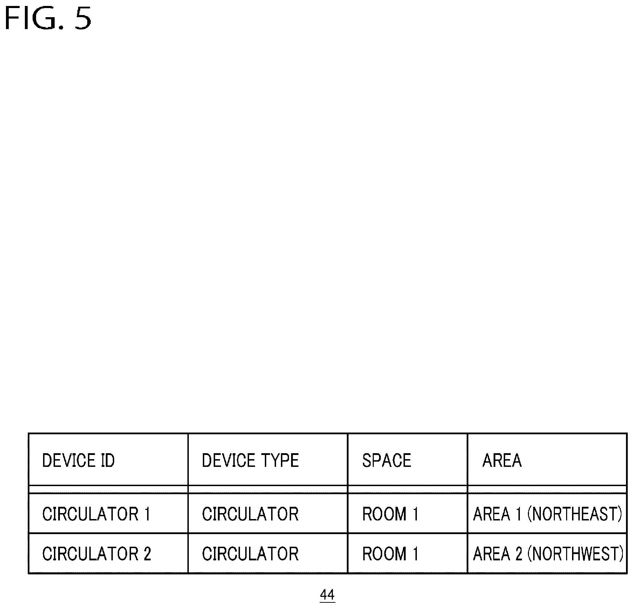

Referring back to Fig. 2, the device information storage unit 44 stores information related to one or more devices to be controlled (the plurality of circulators 16 in the embodiment) installed in the target space 12 (hereinafter, "device information"). Fig. 5 shows an example of the device information. The device information includes the IDs and device types of the circulators 16 and the IDs of spaces and the IDs of areas in which the circulators 16 are installed. The circulator 1 in Fig. 5 corresponds to the circulator 16a in Fig. 1, for example. The circulator 2 in Fig. 5 corresponds to the circulator 16b in Fig. 1, for example.

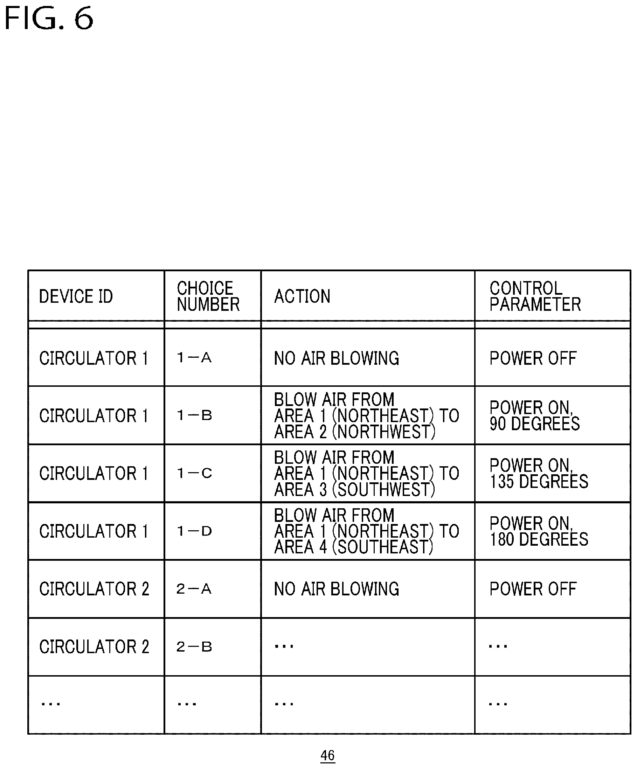

Referring back to Fig. 2, the choice storage unit 46 stores choice information. Fig. 6 shows an example of the choice information. The choice information includes the ID of a device to be controlled (the circulators 16 in the embodiment), a choice number, an action, and a control parameter. Choice numbers 1-A to 1-D in Fig. 6 are choices related to circulators 1. The action represents information that indicates the control mode of the device to be controlled, in other words, information that indicates the operation mode of the device to be controlled. For example, the action represents information that defines from which area to which area the circulators 16 are to blow air. The control parameter is a parameter required when instructing a device to perform the operation specified by the action. For example, the control parameter includes information that specifies on or off of the power and the air blowing angle.

Referring back to Fig. 2, the processing unit 30 includes a premise acquiring unit 50, a choice acquiring unit 52, a prompt creating unit 54, a response acquiring unit 56, an interpretation unit 58, and a device control unit 60. The functions of these multiple functional blocks may be implemented in a computer program. This computer program may be installed in a storage of the device controller 20. The processor of the device controller 20 may read this computer program into the main memory and execute the computer program so as to thereby exert the functions of the multiple functional blocks.

The premise acquiring unit 50 acquires premise information regarding control of the device to be controlled that corresponds to a problem selected by the user based on data in the template storage unit 38, the spatial information storage unit 40, and the sensor information storage unit 42. For example, the device to be controlled that corresponds to the ventilation problem is the circulators 16.

The choice acquiring unit 52 acquires choice information including a plurality of choices corresponding to a plurality of control modes of the device to be controlled based on the data in the device information storage unit 44 and the choice storage unit 46.

The prompt creating unit 54 generates data for an input sentence (prompt) to the generative AI based on the premise information acquired by the premise acquiring unit 50 and the choice information acquired by the choice acquiring unit 52.

The response acquiring unit 56 inputs the prompt to the generative AI by transmitting the data of the prompt generated by the prompt creating unit 54 to the chatbot server 18. The response acquiring unit 56 acquires from the chatbot server 18 output information (hereinafter, also referred to as "response information") output from the generative AI that indicates a specific choice selected from among a plurality of choices set in the prompt.

The interpretation unit 58 interprets the response information from the generative AI acquired by the response acquiring unit 56. If an error exists in the response information from the generative AI, the interpretation unit 58 detects the error.

The device control unit 60 uses the response information from the generative AI to perform a process related to the control of the device to be controlled. In the embodiment, if no error exists in the response information from the generative AI, the device control unit 60 controls the device to be controlled based on the response information. The device control unit 60 controls the device to be controlled to operate in a mode indicated by a choice selected in the response information.

An explanation will be given of the operation of a device controller 20 in a user's house with the above configuration. A template created by a service provider or the user may be stored in the template storage unit 38 of the device controller 20. The service provider is, for example, a provider of the device controller 20 or a provider of a device control application installed in the device controller 20. Alternatively, the template storage unit 38 may store a template created by another user and distributed via a communication network.

The spatial information storage unit 40 of the device controller 20 may store spatial information created by the user. Alternatively, the spatial information storage unit 40 may store spatial information in which a floor plan created by the user has been made into sentences using a known method. Alternatively, the spatial information storage unit 40 may store spatial information that has been modified by the user from a template of spatial information provided by a service provider. Alternatively, the spatial information storage unit 40 may store as the spatial information a description text of a space created using a known method based on a photograph of the space entered by the user.

Sensor information created by the user may be stored in the sensor information storage unit 42 of the device controller 20. The areas shown in the sensor information may be set based on the locations of the sensors 14 written in the floor plan used in the creation of the spatial information. The areas shown in the sensor information may be set based on the results of self-position estimation of each of the sensors 14 using Wi-Fi (registered trademark) or Bluetooth (registered trademark).

Device information created by the user may be stored in the device information storage unit 44 of the device controller 20. The areas shown in the device information may be set based on the locations of devices written in the floor plan used in the creation of the spatial information. The spaces and areas shown in the device information may be set based on the results of self-position estimation of each of the devices using Wi-Fi (registered trademark) or Bluetooth (registered trademark).

Choice information created by the user may be stored in the choice storage unit 46 of the device controller 20. The choice information for the plurality of devices to be controlled may be provided by the provider of each device. The choice information may be set based on the locations of the devices written in the floor plan used in the creation of the spatial information.

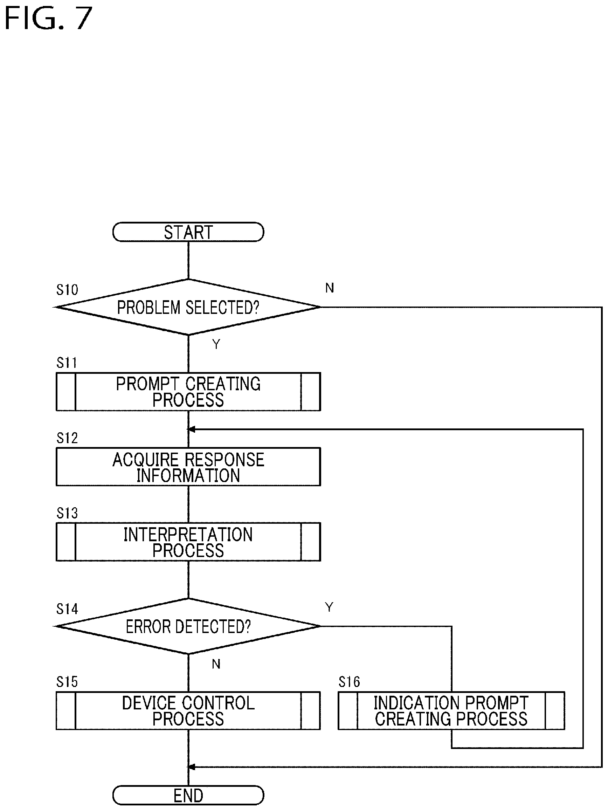

Fig. 7 is a flowchart showing the operation of the device controller 20. The user inputs an operation to select a problem desired to be solved (e.g., a ventilation problem) from among a plurality of predetermined problems and a space in which the problem is to be solved (e.g., the target space 12) (hereinafter also referred to as "problem selection operation"). When the problem selection operation is input (Y in S10), the premise acquiring unit 50, the choice acquiring unit 52, and the prompt creating unit 54 of the device controller 20 execute a process for creating a prompt that corresponds to the selected problem (S11).

The response acquiring unit 56 of the device controller 20 transmits the prompt created in S11 to the chatbot server 18 so as to thereby input the prompt to the generative AI. The response acquiring unit 56 acquires response information from the generative AI for the prompt transmitted from the chatbot server 18 (S12).

The interpretation unit 58 of the device controller 20 interprets the response information acquired in S12 and identifies a choice (can be also called control mode) selected by the generative AI for each device to be controlled (S13). If an error is included in the response information, the interpretation unit 58 detects the error. For example, the interpretation unit 58 detects an error when one choice selected by the generative AI for at least one device cannot be identified from the response information.

When no error is detected from the response information (N in S14), the device control unit 60 of the device controller 20 executes a process for controlling the device to be controlled (S15). When an error is detected from the response information (Y in S14), the prompt creating unit 54 of the device controller 20 generates a prompt indicating the error (hereinafter also referred to as "indication prompt") (S16). The indication prompt can be also considered as a prompt that instructs the output of a new response in which the error is resolved.

Hereinafter, referring back to S12, the response acquiring unit 56 of the device controller 20 transmits the indication prompt created in S16 to the chatbot server 18 so as to thereby input an indication prompt to the generative AI. The response acquiring unit 56 acquires response information from the generative AI in response to the indication prompt. When no problem selection operation has been input (N in S10), S11 and subsequent processes are skipped.

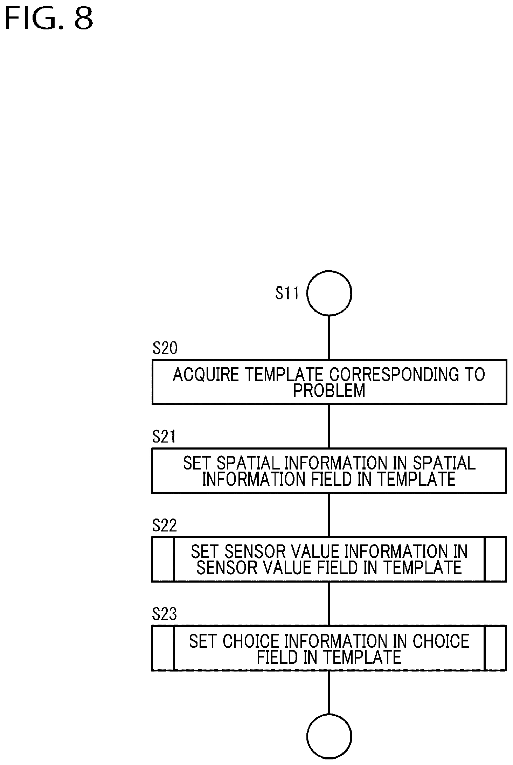

Fig. 8 is a flowchart showing the details of the prompt creating process in S11 in Fig. 7. The premise acquiring unit 50 of the device controller 20 reads out a template corresponding to the problem selected by the user from the plurality of templates stored in the template storage unit 38 (S20). In this process, a ventilation problem is selected, and a template 70 in Fig. 3 corresponding to the ventilation problem is read out.

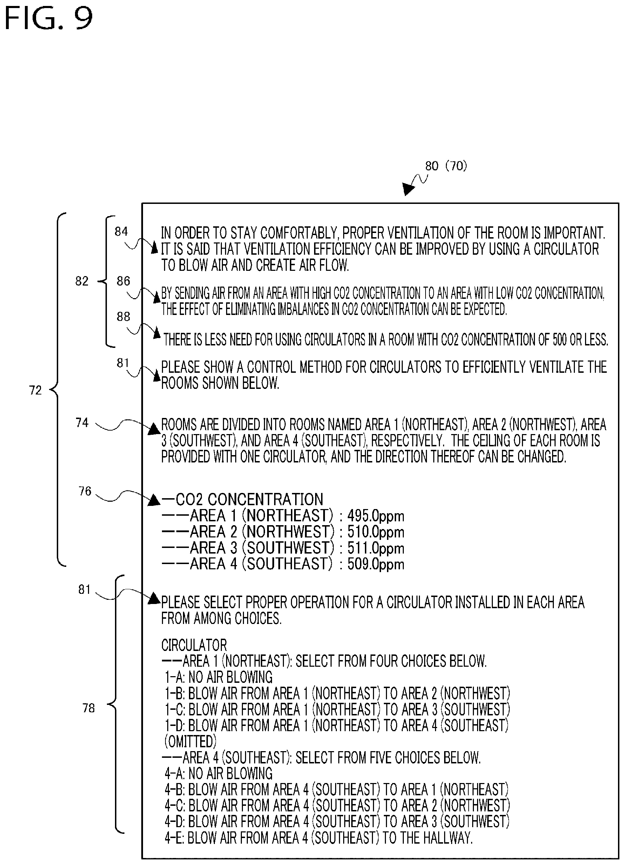

Fig. 9 shows an example of a prompt. A prompt 80 in Fig. 9 is a prompt corresponding to the ventilation problem and is obtained by adding spatial information, sensor value information, choice information, etc., to the template 70 in Fig. 3. The prompt 80 (template 70) includes a question sentence 81 for the generative AI according to the problem to be solved. The question sentence 81 in Fig. 9 includes a question regarding how to control the circulators 16.

As explained in connection with Fig. 3, the template 70 includes predetermined premise information 72 corresponding to the problem. The premise information 72 includes a precondition 82 in addition to the spatial information field 74 and the sensor value field 76. The precondition 82 is a condition that must be met to improve the environment of the space in which the device to be controlled operates. The precondition 82 according to the embodiment is a condition that must be met to improve the air environment of the target space 12 in which the circulators 16 operate.

The precondition 82 according to the embodiment includes efficiency improvement information 84, an air blowing mode 86, and an activation condition 88. The efficiency improvement information 84 is information related to the improvement in the ventilation efficiency. For example, the efficiency improvement information 84 is information indicating how the ventilation efficiency can be improved. The air blowing mode 86 represents information related to how air is sent by the circulators 16. For example, the air blowing mode 86 represents information that indicates in which direction air should be sent. The activation condition 88 represents information related to the activation condition of the circulators 16. For example, the activation condition 88 represents information indicating under what circumstances the circulators 16 should be activated or under what circumstances the circulators 16 should not be activated.

Referring back to Fig. 8, from the plurality of pieces of spatial information stored in the spatial information storage unit 40, the premise acquiring unit 50 of the device controller 20 reads out spatial information regarding a space (the target space 12 in this case) in which the problem specified in the problem selection operation should be solved. The prompt creating unit 54 of the device controller 20 sets the spatial information of the target space 12 in the spatial information field 74 of the template 70 (S21).

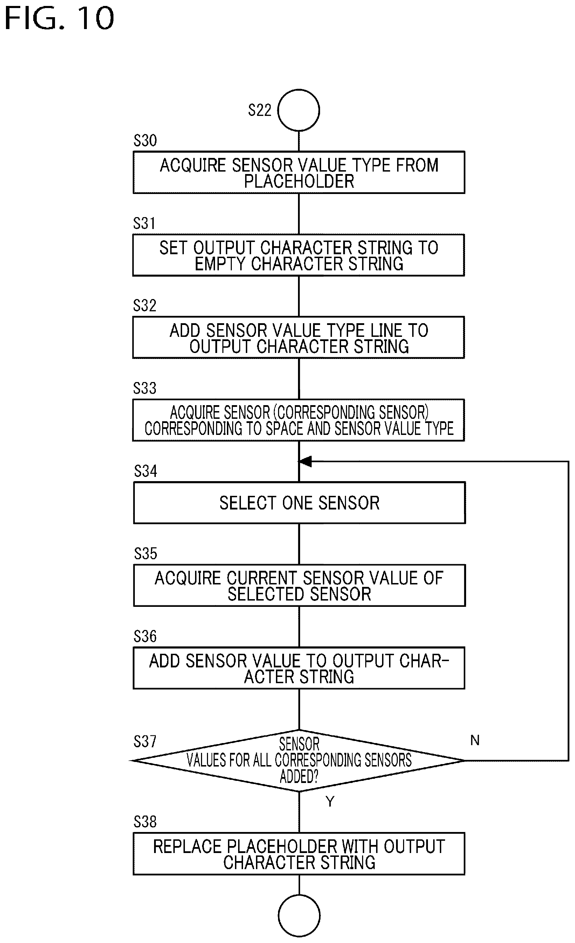

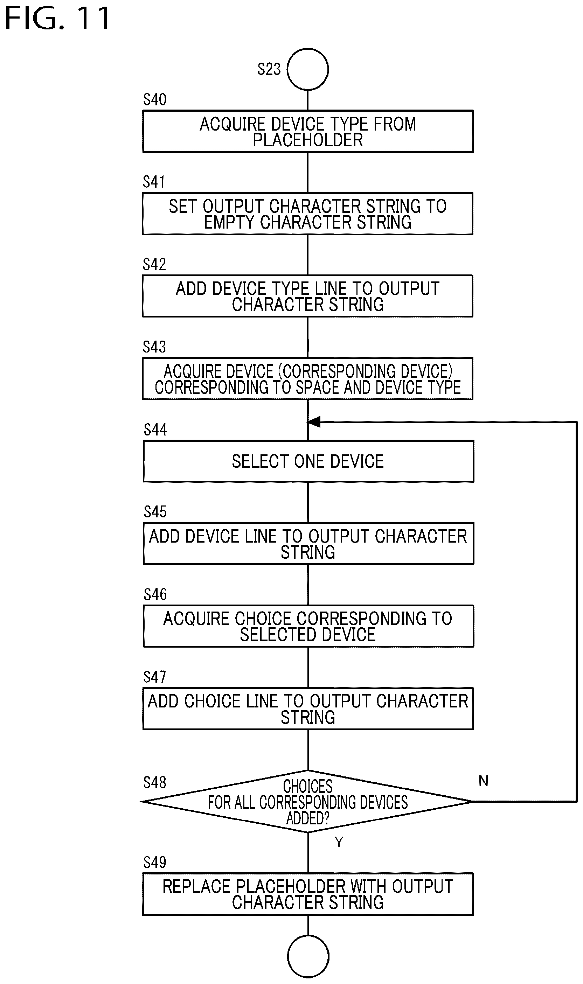

As described below in connection with Fig. 10, the premise acquiring unit 50 and the prompt creating unit 54 of the device controller 20 set sensor value information in the sensor value field 76 of the template 70 (S22). As described below in connection with Fig. 11, the choice acquiring unit 52 and prompt creating unit 54 of the device controller 20 set choice information in the choice field 78 of the template 70 (S23).

Fig. 10 is a flowchart showing the details of a sensor value information setting process in S22 in Fig. 8. The sensor value field 76 of the template 70 is provided with a placeholder indicating a sensor value type to be set in that field. The premise acquiring unit 50 acquires the sensor value type (e.g., "CO2 concentration") from the placeholder in the sensor value field 76 (S30). The prompt creating unit 54 sets an output character string to an empty character string (S31). The prompt creating unit 54 adds a sensor value type line (e.g., "CO2 concentration") to the output character string (S32).

The premise acquiring unit 50 acquires information of a sensor that corresponds to the target space 12, which is the space in which the problem is to be solved, and the sensor value type (hereinafter also referred to as "corresponding sensor") from the plurality of sensors stored in the sensor information storage unit 42 (S33). For example, information of a plurality of CO2 sensors is acquired as information of a plurality of corresponding sensors. The premise acquiring unit 50 selects one corresponding sensor from the plurality of corresponding sensors (S34). The premise acquiring unit 50 acquires the current sensor value output from the one corresponding sensor selected in S34 (S35). The current sensor value is, for example, the current CO2 concentration in the area where the sensor is installed, as measured by a CO2 sensor serving as the corresponding sensor.

The prompt creating unit 54 adds the current sensor value acquired in S35 to the output character string (S36). For example, as shown in the sensor value field 76 in Fig. 9, the prompt creating unit 54 adds a character string indicating the installation area and sensor value of the one corresponding sensor selected in S34 (e.g., "Area 1 (northeast): 495.0 ppm") to the output character string.

When the sensor values of all the corresponding sensors acquired in S33 are added to the output character string (Y in S37), the prompt creating unit 54 sets the output character string to the sensor value field 76. In other words, the prompt creating unit 54 replaces the placeholder in the sensor value field 76 with the output character string (S38). When the sensor values of some corresponding sensors have not yet been set in the output character string (N in S37), the process returns to S34.

Fig. 11 is a flowchart showing the details of a choice information setting process in S23 in Fig. 8. The choice field 78 of the template 70 is provided with a placeholder indicating a device type to be set in that field. The choice acquiring unit 52 acquires the device type (e.g., "circulator") from the placeholder in the choice field 78 (S40). The prompt creating unit 54 sets an output character string to an empty character string (S41). The prompt creating unit 54 adds the device type (e.g., "circulator") to the output character string (S42).

The choice acquiring unit 52 acquires the information of a device corresponding to the target space 12 and the device type (hereinafter also referred to as "corresponding device") from the device information stored in the device information storage unit 44. The corresponding device is also considered as a device to be controlled. For example, the information of the plurality of circulators 16 installed in the target space 12 is acquired as information of a plurality of corresponding devices. The choice acquiring unit 52 selects one corresponding device from among the plurality of corresponding devices (S44). The prompt creating unit 54 adds a device line (e.g., "circulator 1") or an area line (e.g., "Area 1") for the one corresponding device selected in S44 to the output character string (S45).

The choice acquiring unit 52 acquires choice information (e.g., four choices numbered 1-A to 1-D in Fig. 6) related to the one corresponding device selected in S44 from the choice information stored in the choice storage unit 46 (S46). The prompt creating unit 54 adds the choice information acquired in S46 to the output character string (S47). For example, as shown in the choice field 78 in Fig. 9, the prompt creating unit 54 adds four choices (1-A to 1-D) regarding the control mode of the circulator 1 installed in Area 1 to the output character string.

When the choice information of all the corresponding devices acquired in S43 is added to the output character string (Y in S48), the prompt creating unit 54 sets the output character string in the choice field 78, in other words, replaces the placeholder in the choice field 78 with the output character string (S49). When the choice information of some corresponding devices have not yet been set in the output character string (N in S48), the process returns to S44.

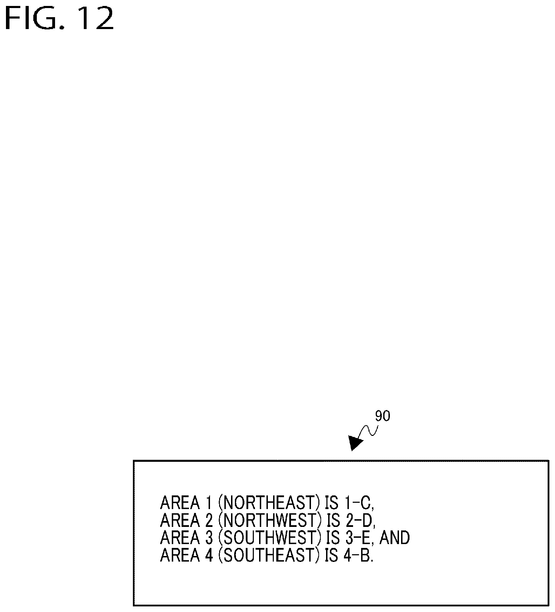

Fig. 12 shows an example of response information from generative AI acquired in S 12 in Fig. 7. The response information 90 includes information indicating a choice selected by the generative AI for each unit (e.g., device or area) to be controlled that is specified in the prompt. The response information 90 in Fig. 12 indicates that Choice 1-C (e.g., to blow air from Area 1 to Area 3) has been selected as the control mode for the circulator 16a installed in Area 1. Further, the response information 90 in Fig. 12 indicates that Choice 2-D (e.g., to blow air from Area 2 to Area 4) has been selected as the control mode for the circulator 16b installed in Area 2.

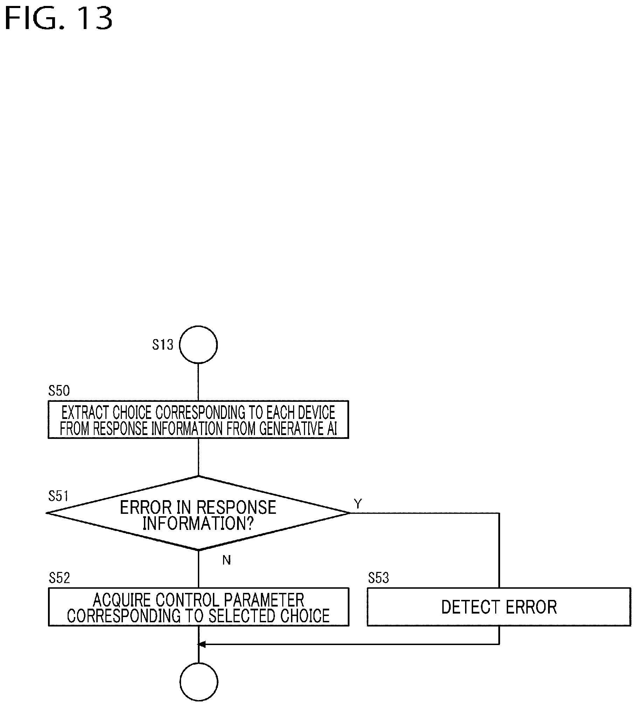

Fig. 13 is a flowchart showing the details of an interpretation process in S13 in Fig. 7. The interpretation unit 58 of the device controller 20 extracts a choice corresponding to each device from the response information from the generative AI (S50). For example, based on the response information 90 in Fig. 12, the interpretation unit 58 extracts Choice 1-C as the operation mode of the circulator 16a installed in Area 1 and Choice 2-D as the operation mode of the circulator 16b installed in Area 2. The interpretation unit 58 may extract a choice for each device using a known natural language process (e.g., rule-based, machine learning, or the like) or may extract a choice for each device based on a predetermined response format.

The interpretation unit 58 determines whether there are errors in the response information from the generative AI. For example, the interpretation unit 58 determines whether valid choices are being selected one each for all the devices set in the prompt 80 in the response information. When valid choices are being selected one each for all the devices set in the prompt 80 in the response information, the interpretation unit 58 determines that there is no error in the response information. The interpretation unit 58 determines that there is an error in the response information when: (1) a non-existent choice is selected in the response information; (2) a plurality of choices are selected for one device in the response information; or (3) choices for each device cannot be extracted from the response information.

When it is determined that there is no error in the response information from the generative AI (N in S51), the device control unit 60 of the device controller 20 refers to the choice information stored in the choice storage unit 46 and acquires a control parameter associated with a choice selected for each corresponding device (S52). When it is determined that there is an error in the response information from the generative AI (Y in S51), the interpretation unit 58 detects an error (S53).

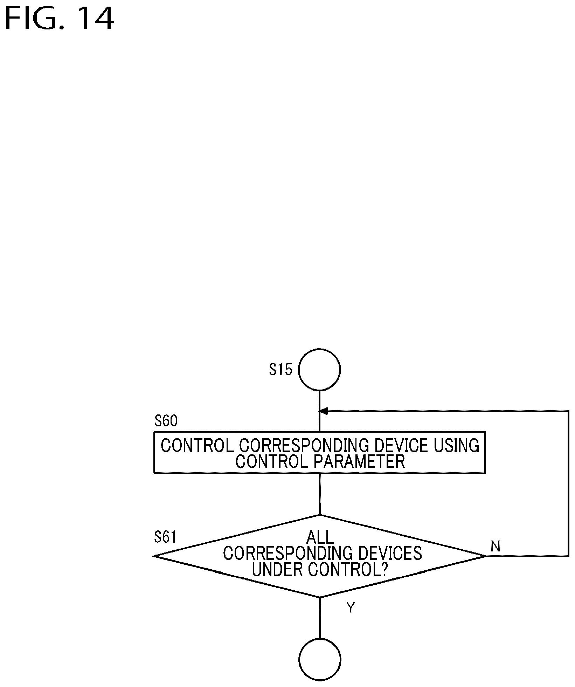

Fig. 14 is a flowchart showing the details of a device control process in S15 in Fig. 7. The device control unit 60 of the device controller 20 controls a certain corresponding device using the control parameter acquired in S52 (S60). When there is a corresponding device that has not yet been controlled (N in S61), the process in S60 is repeated. The device control process ends when control of all the corresponding devices is completed (Y in S61).

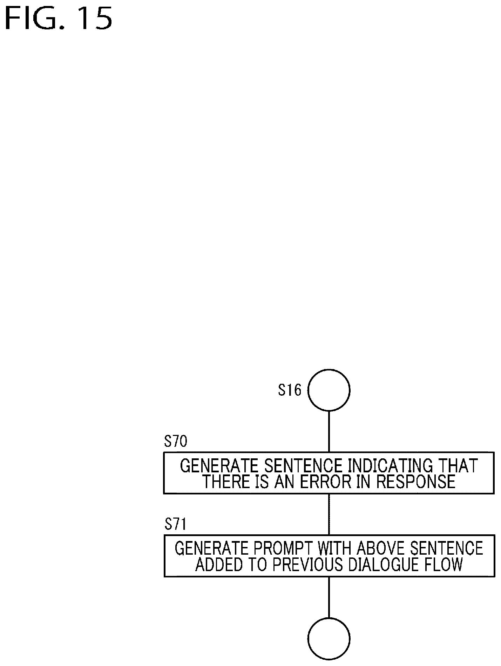

Fig. 15 is a flowchart showing the details of an indication prompt creating process in S16 in Fig. 7. The prompt creating unit 54 of the device controller 20 generates a sentence indicating that there is an error in the response (hereinafter also referred to as "indication sentence") (S70). The prompt creating unit 54 generates an indication prompt, which is a prompt with the indication sentence added to the previous dialogue flow (S71).

For example, if the reason for the error is the selection of a non-existent choice, the indication sentence may be "Although Choice 1-E is being selected for the circulator 16a in Area 1, the choice does not exist. Please choose from the choices given previously." When the reason for the error is the selection of a plurality of choices for one device, the indication sentence may be "Choices 1-A and 1-B are being selected for the circulator 16a in Area 1. Only one choice can be selected per device. Please choose one."

When the reason for the error is a failure to extract a choice from the response information, the indication sentence may be "Unable to interpret which choice has been selected for each device based on the previous response. Please make your response clearer and easier to interpret." When the format of the response is specified in the prompt, the sentence may be "Unable to interpret which choice has been selected for each device based on the previous response. Please make a response in the specified format."

According to the device controller 20 of the embodiment, the appropriate control mode for the device can be efficiently selected using the generative AI, and the operation of the device in the mode selected by the generative AI can be automated. According to the device controller 20, by inputting a single template in which multiple types of mutually independent parameters such as spatial information and sensor information are put together to the generative AI, the control mode of the device where those multiple types of parameters are taken into account can be efficiently determined.

The device to be controlled in the embodiment is a circulator, and according to the device controller 20, including premise information for improving the environment of a space where the circulator operates in a prompt can allow the generative AI to select a control mode of the circulator to improve the environment of the space. Furthermore, according to the device controller 20, including efficiency information, an air blowing mode, and an activation condition in a precondition of premise information can allow the generative AI to more appropriately select the control mode of the circulator.

The present disclosure has been described based on the embodiment. The embodiment is intended to be illustrative only, and it will be understood by those skilled in the art that various modifications to constituting elements and processes in the embodiment could be developed and that such modifications are also within the scope of the present disclosure.

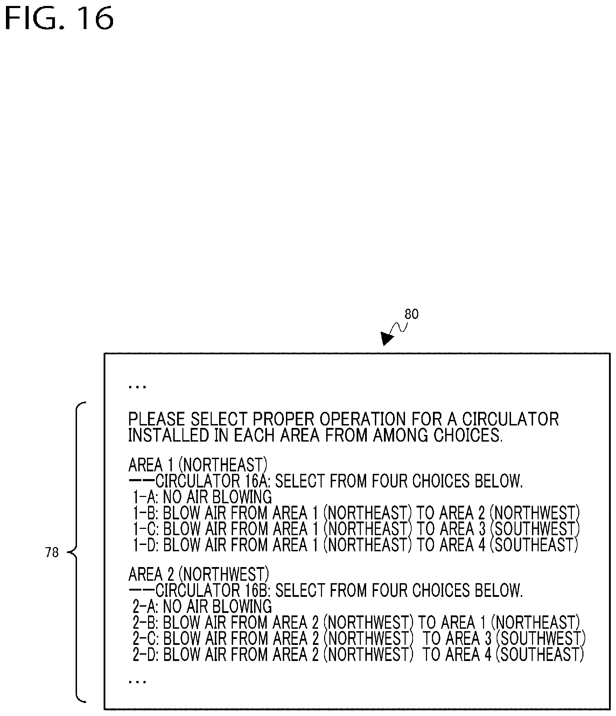

The first exemplary variation will now be described. Fig. 16 shows an example of a prompt 80 according to the first exemplary variation. A choice field 78 of the prompt 80 may be filled out in the order shown in Fig. 16 instead of the order shown in Fig. 9.

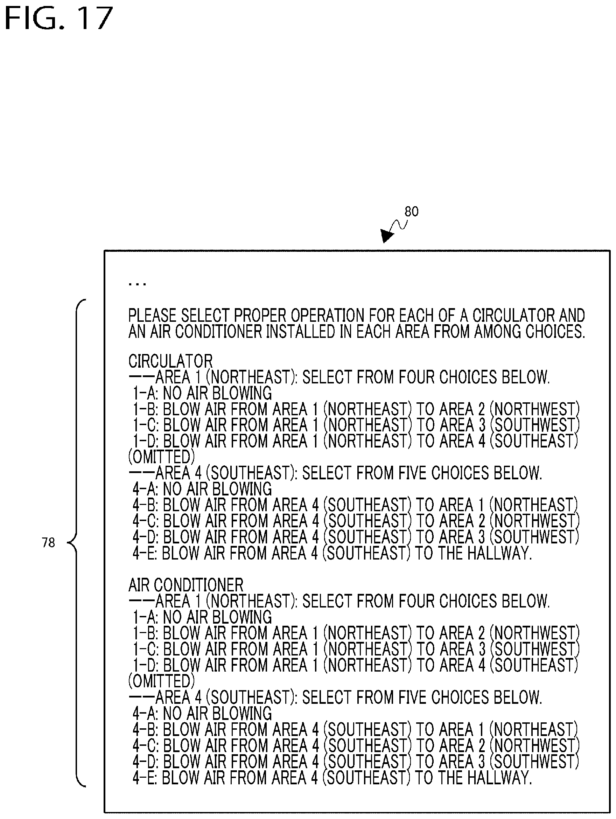

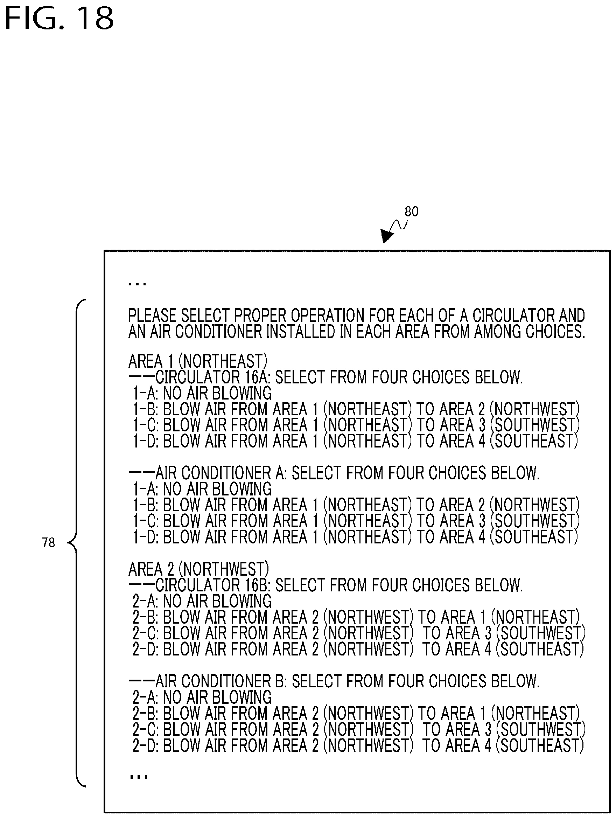

The second exemplary variation will now be described. Multiple types of devices to be controlled may be installed in one target space. Fig. 17 shows an example of a prompt 80 according to the second exemplary variation. In this example, a circulator and an air conditioner are installed in each of Areas 1 through 4 of the target space. Fig. 18 shows another example of the prompt 80 according to the second exemplary variation. A choice field 78 of the prompt 80 may be filled out in the order shown in Fig. 18 instead of the order shown in Fig. 17.

The third exemplary variation will be described. Instead of directly controlling the device, the device controller 20 may act as a server and transmit information based on a choice of each device selected by the generative AI to a client device (such as a user terminal). The information based on a choice of each device may be information indicating a control mode corresponding to the choice or may be information including a control parameter corresponding to the choice. The user terminal may control the device based on the information provided by the device controller 20.

The fourth exemplary variation will be described. The technical concept of the above embodiment can be applied to control various devices other than the circulators 16 (e.g., devices that change the environment of a space). The following is an example of controlling devices other than the circulators 16.
(1) The technical concept of the above embodiment can be applied to control lighting devices. In this case, spatial information includes the position of lighting in a space. A precondition includes at least one of information related to the control of the lighting and information related to an activation condition of the lighting device. Sensors include a sensor that measures illuminance, a sensor that measures time, and a sensor that measures the number of people. Choices include combinations of lighting brightness and color.
(2) The technical concept of the above embodiment can be applied to control air purifiers. In this case, spatial information includes the position of an air purifier. Sensors include a sensor that measures air quality (e.g., dust, PM 2.5, and pollen concentration). Choices include operation intensity of an air purifier and the direction of a circulator. The technical concept of the above embodiment can be applied to control air conditioners. In this case, the spatial information includes the position of an air conditioner. A precondition includes at least one of information related to the control of the air conditioner and information related to an activation condition of the air conditioner. Sensors include a sensor that measures temperature or humidity and a sensor that measures the number of people. Choices include a set temperature, the airflow direction of an air conditioner, and the volume of air.
(3) The technical concept of the above embodiment can be applied to control a sound device (speaker). In this case, the spatial information includes the type of a space (also called a room type, e.g., a living room, a work room, a bedroom, etc.). A precondition includes at least one of the following: the type of audio content, information related to sound volume, and information related to the activation condition of the device. Sensors include a sensor that measures the number of people and a sensor that recognizes human behavior. Choices include the type of audio content to be output and the sound volume.

The fifth exemplary variation will be described. In the above embodiment, the user selects a problem to be solved by controlling the device. As an exemplary variation, the system may be configured to automatically select a problem and repeat optimization. Shown in the following is an example where the system automatically selects a problem.
(1) At constant time intervals, the device controller 20 may create prompts for all of multiple predetermined problems and acquire responses from the generative AI so as to control the device. When the devices to be controlled overlap among multiple problems, the device controller 20 may set a priority for each problem based on a predetermined rule and process the problems with the highest priority first.
(2) The device controller 20 may select a problem based on a predetermined problem selection rule. The problem selection rule may specify, for example, that an air conditioning control (e.g., circulator control) problem is selected if the average CO2 concentration in a target space 12 exceeds 600 ppm.
(3) The device controller 20 may sequentially provide the sensor value of a sensor 14 installed in the target space 12 to the chatbot server 18 (generative AI) so as to allow the generative AI to determine which problem should be selected from among multiple predetermined problems. The entity that selects the problem is not limited to the generative AI and may also be a general machine learning model.

As the sixth exemplary variation, an example of a display will be described that supports problem selection operation input in S10 in Fig. 7. In the present exemplary variation, the device controller 20 further includes an input screen creating unit, a display control unit, and a display unit. The display unit may include a liquid crystal display or an organic EL display. The input screen creating unit generates data for an input screen that supports problem selection operation input performed by the user. The display control unit displays the input screen created by the input screen creating unit on the display unit.

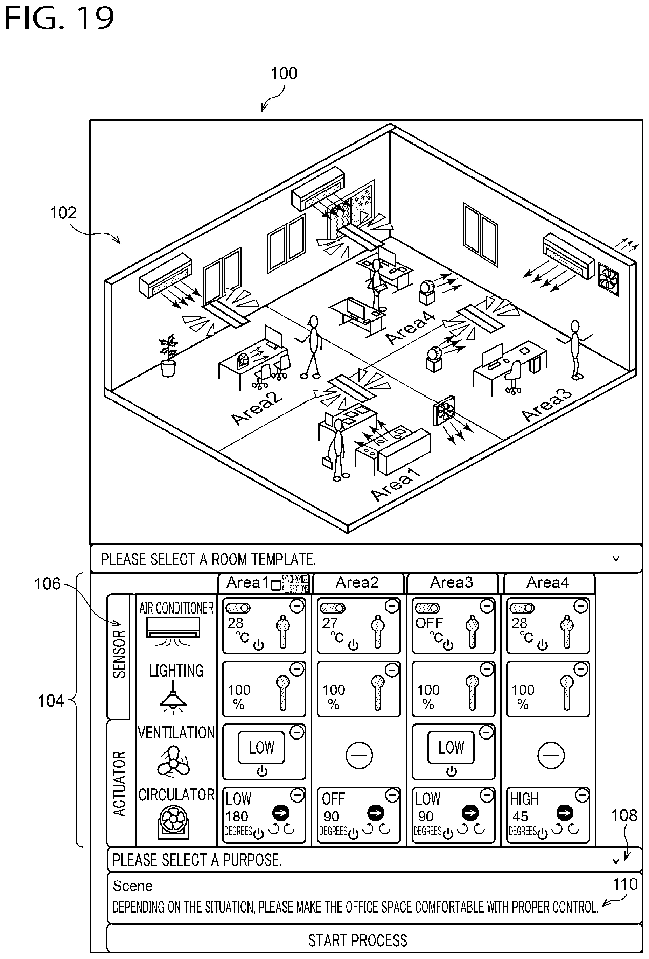

Fig. 19 shows an example of an input screen 100. The input screen 100 includes a target space image diagram 102, which is an image diagram of the target space 12. The target space image diagram 102 may be a schematic diagram, a block diagram such as Fig. 1, or a photograph of the actual target space 12. The target space image diagram 102 clearly shows the division of the target space 12 into areas. The target space image diagram 102 in Fig. 19 shows the target space 12 including four areas, Area 1 to Area 4.

The input screen 100 includes a device operating status 104. The device operating status 104 displays the operating status of the device for each area. The device operating status 104 in Fig. 19 shows the operating status of each of the four devices: an air conditioner; a lighting device; a ventilation device; and a circulator, in each of the four areas. No operating status is displayed for devices not installed in a certain areas (in the example in Fig. 19, ventilation devices in Areas 2 and 4).

When a sensor tab 106 of the device operating status 104 is selected, the input screen creating unit may create and display an input screen 100 with sensor information such as the one as shown in Fig. 4 for the device operating status 104. A drop-down list 108 is a screen element that presents multiple predetermined problems to the user and allows the user to select a problem that the user wishes to solve from among those problems. In a selection result area 110, the input screen creating unit sets the information of the problem selected in the drop-down list 108.

Choices in the drop-down list 108 may include one of or both information related to a space in which the device operates and information related to the device to be controlled, which are to be included in the premise information. For the sake of simplicity of explanation, the choices include both information related to the space in which the device operates and information related to the device to be controlled in the following. The operation input unit 36 of the device controller 20 may receive the information of the choice selected in the drop-down list 108, i.e., the information related to the space in which the device operates and the information related to the device to be controlled that have been selected. As the premise information, the premise acquiring unit 50 of the device controller 20 may acquire the information related to the space in which the device operates and the information related to the device to be controlled that have been selected in the drop-down list 108. The prompt creating unit 54 of the device controller 20 may create a prompt that is based on the premise information and the corresponding choice information thereof.

The user may select a space where the problem should be solved in the target space image diagram 102. The user may select tabs for Area 1 to Area 4 in the device operating status 104 in designating the space where the problem should be solved. As another aspect, the user may (1) select the device (horizontal axis) desired to be controlled in the device operating status 104, or (2) select the combination of the device desired to be controlled in the device operating status 104 and an area (e.g., air conditioner-Area 1, etc.).

In the case of (1), all areas where the selected device is installed may be input as "spaces where the problem should be solved." In the case of (2), the selected area may be input as "space where the problem should be solved." For example, if four items: air conditioner-Areas 1 and 2; and circulator-Areas 1 and 4, are selected in the device operating status 104, Areas 1, 2, and 4 may be input as "spaces where the problem should be solved." In either of the cases (1) and (2), the input screen creating unit may acquire only choices related to the selected device and/or area and set the choices in the drop-down list 108.

As yet another aspect, the input screen creating unit may set the choice information to the input screen 100, in other words, the input screen creating unit may output the choice information to the user. The input screen creating unit may display the choice information on the input screen 100 at all times or may display the choice information when any device or item is selected.

In S10 of Fig. 7, the problem is not limited to a predetermined problem, and a problem that the user wishes to solve may be input. For example, the user may input information related to an arbitrary problem that the user wishes to solve on the input screen 100 in Fig. 19. The prompt creating unit 54 of the device controller 20 may set the information on the arbitrary problem that the user wishes to solve, as input on the input screen 100, to the prompt. The premise acquiring unit 50 of the device controller 20 may infer which of the multiple predetermined problems the arbitrary problem that the user wishes to solve that has been input on the input screen 100 corresponds to, and acquire premise information based on the result. In the same way, the choice acquiring unit 52 may infer which of the multiple predetermined problems the problem that the user wishes to solve that has been input on the input screen 100 corresponds to, and acquire a choice based on the result.

As the seventh exemplary variation, an exemplary variation of the device control process in S15 in Fig. 7 will be described. In the device control process, the device may be controlled, and information related to the control status of the device may be output (displayed) to the user. The information related to the control status of the device can be considered as the control details of the device selected by the generative AI. For example, the input screen creating unit shown in the sixth exemplary variation may acquire the control details of the device from the device control unit 60 and set the control details of the device in the device operating status 104 of the input screen 100 shown in the sixth exemplary variation (Fig. 19). In this case, the input screen creating unit may set information of a choice (i.e., output result) selected by the generative AI in the selection result area 110 of the input screen 100. If the generative AI generates reasons for selection, additional information, and the like as information other than choices, the input screen creating unit may set these pieces of information in the selection result area 110 of the input screen 100.

The eighth exemplary variation will be described. When the plurality of sensors 14 include a human sensor or camera that measures the number of people present in the target space 12, (1) the sensor value field 76 may include the number of people in the target space 12 detected by the sensors 14 instead of the CO2 concentration of the target space 12, and (2) the sensor value field 76 may include the number of people in the target space 12 detected by the sensors 14 along with the CO2 concentration of the target space 12. In both cases (1) and (2), specifically, the number of people in each area in the target space 12 is included.

In the case (1), the precondition 82 may include a precondition that is based on the number of people instead of CO2 concentration. For example, the air blowing mode 86 may be "By sending air from an area with a large number of people to an area with a small number of people, the effect of making the area with a large number of people more comfortable can be expected.," and the activation condition 88 may be "There is little need to use a circulator in rooms with two people or less." In the case (2), the precondition 82 may include a precondition that is based on at least one of the CO2 concentration and the number of people. For example, the air blowing mode 86 may be "By sending air from an area with a large number of people to an area with a small number of people, the effect of eliminating imbalances in CO2 concentration can be expected.," and the activation condition 88 may be "There is a strong need to use a circulator in rooms where either the CO2 concentration is 600 or higher or there are five or more people." When the precondition 82 is a precondition related to an air conditioner, for example, "By increasing the degree of control in areas with a large number of people (by lowering the set temperature or increasing the air volume), the effect of making the areas more comfortable can be expected." may be included as the air blowing mode 86. These preconditions may be included in any of the fields of the premise information 72.

According to the configuration in the eighth exemplary variation, preconditions and sensor information that are based on the type of sensors 14 included in the target space 12 and the condition of the target space 12 can be included in a prompt. This can allow the generative AI to more appropriately select a control mode of the device for improving the environment of the space.

The ninth exemplary variation will be described. The device controller 20 may acquire information on a space outside the target space 12 via the communication unit 34. Then, the acquired information on the outside space and the precondition for the information may be included in the premise information 72. The space outside the target space 12 may be, for example, in the same building as that of the target space 12 but in a space different from the target space 12 or may be outside the building, i.e., an outdoor space. The information on the outside space may be, for example, (1) information related to the air quality or information related to the temperature and the humidity in the outside space, and may be (2) weather information including air volume, rainfall, etc.

In the case of (1), for example, the precondition 82 may include as the activation condition 88 "If the air quality in the outside space may have a negative impact on the human body, or if the temperature and humidity in the outside space differ more than a specified amount from the temperature and humidity in the room, ventilation with the outside space should not be performed." When the precondition 82 is a precondition for air conditioner, "If the temperature in the outside space or outdoors differs from the room temperature by a specified amount, the air conditioner needs to be controlled by setting the temperature higher or lower than usual to avoid heat shock." may be included as the activation condition 88. In the case of (2), for example, the precondition 82 may include, as the activation condition 88, "If the air volume or rainfall outside is greater than a specified amount, ventilation with the outside space should not be performed." These preconditions may be included in any of the fields of the premise information 72.

According to the configuration of the ninth exemplary variation, in addition to information from the sensors 14 included in the target space 12, information on a space outside the target space 12 can be included in a prompt as precondition information. This can allow the generative AI to more appropriately select a control mode of the device for improving the environment of the space while taking into account the environment of an outside space.

The tenth exemplary variation will be described. The precondition 82 may further include a precondition that is based on time information and operating costs of the device. For example, "Between 12:00 p.m. and 1:00 p.m., there are fewer people in the area due to the lunch break, so there is less need for device control compared to other times." may be included, and "Between 2:00 p.m. and 4:00 p.m., the CO2 concentration or the temperature tends to be high throughout the area, so preliminary device control needs to be performed from time prior to that time." may be included. Also, "In order to reduce operating costs (or power consumption), it is necessary to control the device so that the operating costs (or power consumption) per hour are kept at or below a predetermined level." may be included. These preconditions may be included in any of the fields of the premise information 72. In addition to the above preconditions, the premise information 72 may also include time information and data information related to the operating cost of the device. For example, the data information related to the operating cost of the device referred to here may include, for example, information on the amount of power consumed as well as information on electricity charges, and if the building to which the target space 12 belongs generates its own electricity from renewable energy sources, etc., the data information may include information related to the amount of electricity sold in addition to the amount of electricity generated in-house.

The eleventh exemplary variation will be described. The device controller 20 may control other devices related to the target space 12 in addition to devices that change the environment of the space including circulators. The other devices may be, for example, devices that cover the openings to the outside space of the device that performs ventilation, as well as devices such as curtains or shutters for shading or protecting the windows included in the target space 12.

The twelfth exemplary variation will be described. The device controller 20 may further display supplementary information to the user present in the target space 12. The supplementary information is, for example, information other than information related to a selected choice included in response information from the generative AI. Furthermore, the device controller 20 may further cause the generative AI to generate a suggestion or an instruction for the user so as to display the generated information as the supplementary information. The suggestion or instruction for the user is information indicating a desirable action to be taken by the user, apart from the control that is specified in the choice and can be controlled by the device controller 20. The suggestion or instruction for the user may be, for example, "Since there is a concentration of people in a particular area, avoiding the concentration of people can improve the efficiency of ventilation and air conditioning.," "It is difficult to make the room comfortable with the current device alone, so it is desirable to add more devices.," or the like.

In addition to the above, the device controller 20 may further cause the generative AI to generate information related to recommended device placement in the target space 12 so as to display the generated information as the supplementary information. The information related to the recommended device placement may be, for example, "Installing a new air conditioner or ventilation device in Area 2 will allow for more efficient ventilation of the room." In particular, if an easily relocatable device such as a circulator is included as a device that changes the environment of the space, information related to the placement of the easily relocatable device may be displayed. In this case, the information related to the recommended device placement may be, for example, "Ventilation of the room can be performed more efficiently by relocating a circulator installed in Area 1 to Area 4."

The display for supporting the problem selection operation input and the display of information related to the control status of the device have been described in the sixth and seventh exemplary variations. In the twelfth exemplary variation, the display of supplemental information to the user may be performed in addition to or instead of the above. The display in the eleventh exemplary variation may be displayed on the display unit of the device controller 20 in the sixth and seventh exemplary variations or may be displayed on a different display device.

Optional combinations of the aforementioned embodiments and exemplary variations will also be within the scope of the present disclosure. New embodiments resulting from the combinations will provide the advantages of the embodiment and the exemplary variations combined. It will be obvious to those skilled in the art that the function to be achieved by each constituent requirement described in the claims are achieved by each constituting element shown in the embodiments and in the exemplary variations or by a combination of the constituting elements.

### <Additional notes>

The following technologies are disclosed by the above description of the embodiments and exemplary variations.

### [Technology 1]

An information processing method implemented by a computer, comprising:
acquiring premise information related to control of a device;
acquiring choice information including a plurality of choices corresponding to a plurality of control modes of the device;
creating an input sentence that is based on the premise information and the choice information; and
inputting the input sentence to generative AI and acquiring output information indicating a specific choice selected from among the plurality of choices.

According to this information processing method, an appropriate control mode for the device can be efficiently selected using the generative AI.

### [Technology 2]

The information processing method according to Technology 1,
wherein the computer further controls operation of the device based on the output information.

According to this information processing method, the operation of the device can be automated in the mode selected by the generative AI.

### [Technology 3]

The information processing method according to Technology 1 or 2,
wherein the premise information includes a precondition for improving an environment of a space in which the device operates.

This information processing method can allow the generative AI to select a control mode for improving the environment of the space.

### [Technology 4]

The information processing method according to Technology 3,
wherein the device is a device that changes the environment of the space.

This information processing method can allow the generative AI to select a control mode of the device that changes the environment of the space so as to improve the environment of the space.

### [Technology 5]

The information processing method according to Technology 4,
wherein the device is an air conditioner or a device that performs ventilation, and
wherein the precondition includes at least one selected from the group consisting of information related to control of the device, information related to ventilation efficiency, and information related to an activation condition.

This information processing method can allow the generative AI to select a control mode of the air conditioner or the device that performs ventilation so as to improve the environment of the space.

### [Technology 6]

The information processing method according to Technology 4,
wherein the device is a lighting device, and
wherein the precondition includes at least one selected from the group consisting of information related to control of lighting and information related to an activation condition.

This information processing method can allow the generative AI to select a control mode of the lighting device so as to improve the environment of the space.

### [Technology 7]

The information processing method according to Technology 4,
wherein the device is a sound device, and
wherein the precondition includes at least one selected from the group consisting of the type of audio content, information related to sound volume, and information related to an activation condition.

This information processing method can allow the generative AI to select a control mode of the sound device so as to improve the environment of the space.

### [Technology 8]

The information processing method according to Technology 1 or 2,
wherein the premise information includes information related to a space in which the device operates.

This information processing method can allow the generative AI to select a control mode of the device more appropriately.

### [Technology 9]

The information processing method according to Technology 8,
wherein the information related to the space includes information indicating division performed on the space into a plurality of areas, and
wherein the choice information is set based on the plurality of areas.

This information processing method can allow the generative AI to select a control mode of the device more appropriately.

### [Technology 10]

The information processing method according to Technology 8,
wherein the information related to the space includes information indicating division performed on the space into a plurality of areas, and
wherein the choice information is set based on one of or both a selected device and a selected area.

This information processing method can allow the generative AI to select a control mode of the device more appropriately.

### [Technology 11]

The information processing method according to Technology 1 or 2,
wherein the premise information includes information related to the status of a space in which the device operates, which is detected by a sensor.

This information processing method can allow the generative AI to select a control mode of the device more appropriately.

### [Technology 12]

The information processing method according to Technology 1 or 2, comprising:
outputting a choice for at least one selected from the group consisting of information related to a space in which the device operates and information related to a device to be controlled, which are desired to be included in the premise information, in the acquiring premise information.

This information processing method can assist the user in selecting appropriate premise information.

### [Technology 13]

The information processing method according to Technology 1 or 2,
receiving user input for at least one selected from the group consisting of information related to a space in which the device operates and information related to a device to be controlled so as to create an input sentence that is based on the input information.

According to this information processing method, an input sentence (prompt) that reflects user's intentions can be created.

### [Technology 14]

The information processing method according to Technology 1 or 2,
outputting information on the specific choice included in the output information or information related to a control status of the device that is based on the output information.

According to this information processing method, selection results generated by the generative AI can be presented to the user in an easy-to-understand manner.

### [Technology 15]

An information processing device comprising:
a premise acquiring unit that acquires premise information related to control of a device;
a choice acquiring unit that acquires choice information including a plurality of choices corresponding to a plurality of control modes of the device;
an input sentence creating unit that creates an input sentence that is based on the premise information and the choice information; and
an output information acquiring unit that inputs the input sentence to generative AI and acquires output information indicating a specific choice selected from among the plurality of choices.

According to this information processing device, an appropriate control mode for the device can be efficiently selected using the generative AI.

### [Technology 16]

A computer program comprising computer-implemented modules including:
a module that acquires premise information related to control of a device;
a module that acquires choice information including a plurality of choices corresponding to a plurality of control modes of the device;
a module that creates an input sentence that is based on the premise information and the choice information; and
a module that inputs the input sentence to generative AI and acquires output information indicating a specific choice selected from among the plurality of choices.

According to this computer program, an appropriate control mode for the device can be efficiently selected using the generative AI.

### INDUSTRIAL APPLICABILITY

The technology according to the present disclosure can be applied to information processing devices and information processing systems.

### REFERENCE SIGNS LIST

10 device control system, 14 sensor, 16 circulator, 18 chatbot server, 20 device controller, 50 premise acquiring unit, 52 choice acquiring unit, 54 prompt creating unit, 56 response acquiring unit, 58 interpretation unit, 60 device control unit

## Claims

1. An information processing method implemented by a computer, comprising:
acquiring premise information related to control of a device;
acquiring choice information including a plurality of choices corresponding to a plurality of control modes of the device;
creating an input sentence that is based on the premise information and the choice information; and
inputting the input sentence to generative AI and acquiring output information indicating a specific choice selected from among the plurality of choices.

2. The information processing method according to Claim 1,
wherein the computer further controls the device based on the output information.

3. The information processing method according to Claim 1 or 2,
wherein the premise information includes a precondition for improving an environment of a space in which the device operates.

4. The information processing method according to Claim 3,
wherein the device is a device that changes the environment of the space.

5. The information processing method according to Claim 4,
wherein the device is an air conditioner or a device that performs ventilation, and
wherein the precondition includes at least one selected from the group consisting of information related to control of the device, information related to ventilation efficiency, and information related to an activation condition.

6. The information processing method according to Claim 4,
wherein the device is a lighting device, and
wherein the precondition includes at least one selected from the group consisting of information related to control of lighting and information related to an activation condition.

7. The information processing method according to Claim 4,
wherein the device is a sound device, and
wherein the precondition includes at least one selected from the group consisting of the type of audio content, information related to sound volume, and information related to an activation condition.

8. The information processing method according to Claim 1 or 2,
wherein the premise information includes information related to a space in which the device operates.

9. The information processing method according to Claim 8,
wherein the information related to the space includes information indicating division performed on the space into a plurality of areas, and
wherein the choice information is set based on the plurality of areas.

10. The information processing method according to Claim 8,
wherein the information related to the space includes information indicating division performed on the space into a plurality of areas, and
wherein the choice information is set based on one of or both a selected device and a selected area.

11. The information processing method according to Claim 1 or 2,
wherein the premise information includes information related to the status of a space in which the device operates, which is detected by a sensor.

12. The information processing method according to Claim 1 or 2, comprising:
outputting a choice for at least one selected from the group consisting of information related to a space in which the device operates and information related to a device to be controlled, which are desired to be included in the premise information, in the acquiring premise information.

13. The information processing method according to Claim 1 or 2, comprising:
receiving user input for at least one selected from the group consisting of information related to a space in which the device operates and information related to a device to be controlled so as to create an input sentence that is based on the input information.

14. The information processing method according to Claim 1 or 2, comprising:
outputting information on the specific choice included in the output information or information related to a control status of the device that is based on the output information.

15. An information processing device comprising:
a premise acquiring unit that acquires premise information related to control of a device;
a choice acquiring unit that acquires choice information including a plurality of choices corresponding to a plurality of control modes of the device;
an input sentence creating unit that creates an input sentence that is based on the premise information and the choice information; and
an output information acquiring unit that inputs the input sentence to generative AI and acquires output information indicating a specific choice selected from among the plurality of choices.

16. A computer program comprising computer-implemented modules including:
a module that acquires premise information related to control of a device;
a module that acquires choice information including a plurality of choices corresponding to a plurality of control modes of the device;
a module that creates an input sentence that is based on the premise information and the choice information; and
a module that inputs the input sentence to generative AI and acquires output information indicating a specific choice selected from among the plurality of choices.
